# EUROPEAN PATENT SPECIFICATION

(11) **EP 1 312 238 B1**
(45) Date of publication and mention of the grant of the patent: **15.10.2008**
(21) Application number: 01976935.5
(22) Date of filing: 17.07.2001
(51) Int. Cl.: H04Q 11/04, G06F 15/16, H04Q 3/00

(54) **INFORMATION ARRANGEMENT IN SDH OR SONET NETWORKS**
INFORMATIONSANORDNUNG IN SDH- ODER SONET-NETZEN
SYSTEME D'INFORMATIONS DANS DES RESEAUX SDH OU SONET

(30) Priority: 17.07.2000 NO 20003648
(43) Date of publication of application: 21.05.2003
(73) Proprietor: TELEFONAKTIEBOLAGET LM ERICSSON (publ), 164 83 Stockholm (SE)
(72) Inventor: KUSTAS, Dag, Gisle, N-4870 Fevik (NO); STORMO, Magne, Sigbjorn, N-4877 Grimstad (NO); LAULO, Karl, Peder, N-4847 Arendal (NO); LARSSON, Pär, S-112 47 Stockholm (SE)
(74) Representative: Sjöberg, Mats Hakan
(86) International application number: PCT/NO2001/000309
(87) International publication number: WO 2002/007475

(56) References cited:
- EP-A2- 0 849 972
- EP-A2- 0 993 135
- WO-A1-97/37453
- WO-A1-98/34366
- GB-A- 2 332 832
- US-A- 6 070 188

## Description

### TECHNICAL FIELD

This invention relates to an object handling arrangement for supervision or management of systems that terminate SDH or SONET signals in accordance with related ITU-T, ETSI, ANSI and TTC standards. The invention is particularly useful in providing a manageable user interface in such systems that become complex by having extensive redundancy provisions.

### THE PROBLEM AREA

Information models or associated information arrangements in accordance with ITU-T and ETSI recommendations or standards define the different layers of the SDH termination as separate objects or entities. Accordingly, the addressing of each of the SDH objects is global, and, hence, there is no identifiable object that represents the common status of objects in the hierarchy for a physical connection. Also, the addressing becomes complex and more complicated when the number of SDH or SONET terminations in a system increases. Furthermore, when introducing protection arrangements or solutions (redundancy on network layers), then the handling aspects become more complicated for the network operator, supervisor or manager as the number of objects to operate, supervise, monitor, control or manage increase significantly.

For a background on the related area, reference is made to the ITU-T, ETSI, ANSI and TTC standards that are applicable to systems that terminate SDH or SONET signals. Hence, in the following description, the ETSI terminology is used, but the principles covered are valid for ANSI and TTC standards as well.

### KNOWN SOLUTIONS

According with ETSI or ITU-T standards or recommendations for termination of SDH STM-n signals, the following termination layers are defined (ITU-T G.707):
For STM-1 termination:
   • Regenerator Section(RS) - section between regenerators
   • Multiplex Section (MS) - Section between multiplexors
   • Virtual Container level 4- Path layer, VC-4
   • Virtual Container level 12 - Path layer, VC-12

In order to monitor, supervise, manage and/or control a termination such as the STM-1 above, the termination layers can be represented by handling objects that can be addressed by the operator, supervisor, manager or the like of the system, e.g. by commands.

By means of protocols that follow the structures of SDH, SONET and/or TTC, it is also possible to implement different protection schemes or arrangements in order to increase the availability of a system that terminates SDH or SONET signals in accordance with the previously mentioned ITU-T, ETSI, ANSI and/or TTC standards.

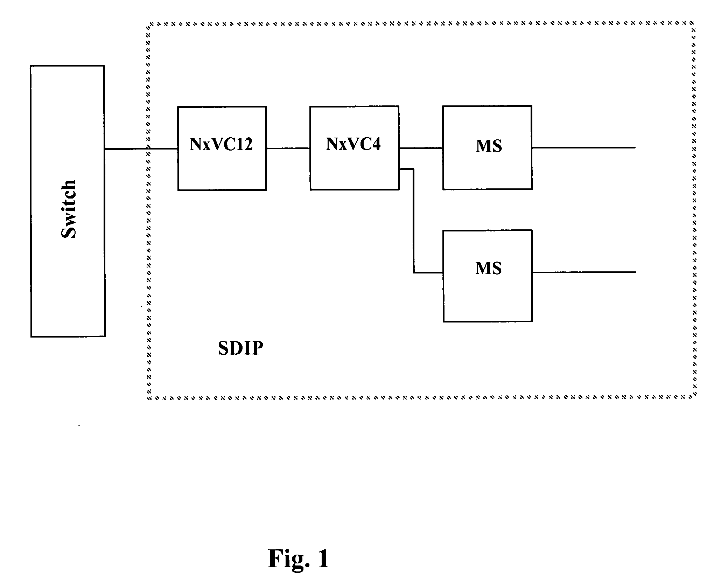

To illustrate a situation according to the above, reference is made to Figure 1 which shows a typical configuration of a protected system with MSP1+1 protection. In such configurations, the traffic carried by one of the MS terminations is protected by the other, and, if the active link fails, then the traffic is moved to the other (standby) link, and no traffic is lost.

In a known solution disclosed by Ericsson such as in EP-A-0 993 135, the addressing of SDH or SONET terminations such as, for example, MS, VC4 and VC12 objects, is handled by using a new object called SDIP that represents all the SDH or SONET layers for a physical connection contained in the termination. The SDIP object also includes global state information showing the state of the sub-objects (e.g. MS, VC-4 and VC-12) contained in the termination. In the following, by way of example, that solution will be explained in more detail by ETSI terminology and with reference to the accompanying fig. 1:
Overall object: "SDIP", representing (or including):
   a) two (2) instances of MS (Multiplex Section) for protection purposes (MSP 1+1 or MSP1:1);
   b) one (1) instance of VC-4; and
   c) up to a maximum of sixty three (63) instances of VC-12.

In the above example of a known arrangement, addressing of any of the sub-objects (i.e. MS, VC-4 or VC-12) is done by looking up the SDIP object in a table. Then, this object points to the contained objects. It should be noted that the above mentioned Regenerator Section (RS) typically present is intentionally not considered in this example since this example is independent of that layer. If the RS had been included, then it would appear as one RS object connected to each MS object.

WO 9834366A1 relates to a method and system for protecting equipment and switching functionality in a telecommunication system system comprising a central processor and regional processors, one or more of which is/are standby processor(s). A protection group is introduced between the existing client(s) and server layers (i.e. switching network terminals). The protection group is administering which server units should be working (active) and which should be standby units. The protection group communicates both with the server(s) (i.e. the switching network terminals) and the client(s) or device(s) in question. The protection group in case of a fault on server layer decides whether to switch to a standby unit or to inform a client that a fault has occurred (i.e. requesting blocking of client).

### PROBLEMS WITH KNOWN SOLUTIONS

The existing arrangement or model of grouping all termination objects (such as VC12, VC4; also referred to as protected layers) and the MS objects (also referred to as the protection layer), may be useful when the number of included objects is small, such as in the case of MSP1+1 or MSP1:1. However, if the existing arrangement or model is to be used for other protection schemes, for instance as in MSP1:N (N=4,8, etc), it is easy to see that the number of included objects will increase dramatically. Hence, the addressing becomes considerably more complex and demanding.

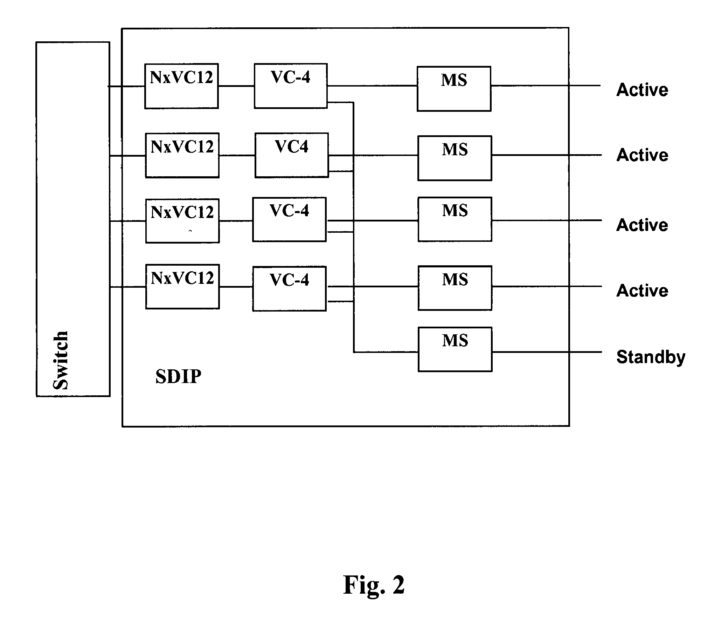

To illustrate the situation, reference is made to fig. 2 where a typical configuration of MSP1:4 is shown. MSP 1:4 means that the traffic carried by the four links on the top of the figure (marked as active) is protected means of the spare or standby link. The four protected links, therefore, belongs to a group that shares the same spare or standby link. If one of these protected links fails, then the traffic is moved to the standby link, and no traffic is lost.

The problem with the existing solution is readily apparent when different protection arrangements are to be represented to a system supervisor, for instance in a MSP 1:N case (i.e. Multiplex Section Protection, N=1,4,8, etc.). Especially for cases of N=4,8, etc., if the existing information arrangement or model should be used, this would give a very large grouping object. This can be seen from the SDIP object in the example illustrated by figure 2.

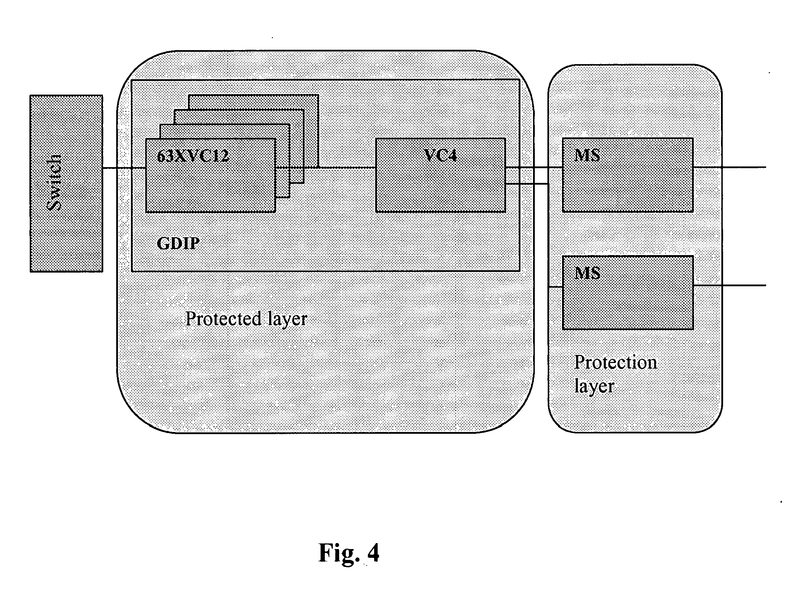

To illustrate how system state will be presented to a supervisor or manager supervising or managing a system as the one shown in fig. 4, the following table I shows a typical example for the SDIP:

**Table I:**

| **SDIP** | **LAYER** | **STATE** | **BLS** | **FAULT** | **TYPE** | **PL/TTI** | **LST** |
|---|---|---|---|---|---|---|---|
| sdip | | state | bls | | | | |
| | MS-0 | state | bls | fault | | | lst |
| | MS-1 | state | bls | fault | | | lst |
| | MS-2 | state | bls | fault | | | lst |
| | MS-3 | state | bls | fault | | | lst |
| | MS-4 | state | bls | fault | | | lst |
| | VC4-0 | state | bls | fault | type | pl/tti | lst |
| | VC4-1 | state | bls | fault | type | pl/tti | lst |
| | VC4-2 | state | bls | fault | type | pl/tti | lst |
| | VC4-3 | state | bls | fault | type | pl/tti | lst |
| | VC12-0 | state | bls | fault | type | | lst |
| | VC12-1 | state | bls | fault | type | | lst |
| | . | . | . | . | . | | . |
| | VC 12-252 | state | bls | fault | type | | lst |

The addressing problem can be seen to worsen even further when an MSP1:8 configuration using the existing information arrangements or model is considered. An MSP1:8 configuration would give a handling object (SDIP) containing 9 MS, 8 VC-4 and 504 VC-12 objects. That is, one SDIP object groups 504 VC-12 terminations which actually belongs to 8 different VC-4 paths, but are protected by means of one common standby MS link.

### OBJECTS OF THE INVENTION.

In accordance with the problems described above, it is an object of the invention to simplify the handling and/or presentation of SDH or SONET handling objects for system and object supervision, operation, monitoring, control or management, and to overcome shortcomings of existing systems in this regard.

### BRIEF DESCRIPTION OF THE INVENTION

The present invention provides a novel arrangement for object handling in object supervision, operation, monitoring, control, management or the like in redundancy protected networks according to SDH or SONET, said networks comprising a plurality of protected items and at least one protection item, wherein at least one group of first information objects representing linked protected items is globally addressable by means of at least one respective GDIP object, said first information objects being addressable relative to said GDIP object.

Preferably, in the novel arrangement for object handling of the invention second information objects representing said protection items are globally addressable.

The present invention further provides an information data object in redundancy protected networks according to SDH or SONET comprising one or more protected items and protection items, wherein the information data object, in use, is a GDIP object being identifiable as an addressable data structure held in one or more registers in a computer and comprises pointers to a set of objects representing protected items.

The present invetion further provides an object arrangement in a redundancy protected network according to SDH or SONET for improved supervision, operation, monitoring, control, management or the like of network items represented by objects, the objects being according to ITU-T, ETSI, ANSI and/or TTC standards, comprising at least one globally addressable GDIP object, each said at least one GDIP object being an information object for information pertaining to a set of associated objects, the set of associated objects representing a plurality of terminations essentially at a level according to ITU-T VC12 and one termination essentially at a level according to ITU-T VC4.

Preferably, in the object arrangement of the invention, each object contained in said set of associated objects is addressable relative to an address of the associated GDIP object.

The present invetion further provides an improvement in a redundancy protected network according to SDH or SONET, wherein the improvement includes layering objects representing terminations into at least one protected layer for protected terminations and at least one protection layer for protecting terminations, and grouping objects representing linked terminations of the at least one protected layer by means of relative addressing into one ore more respective GDIP objects.

According to the present invention, a new arrangement for grouping or representing handling objects is provided in order to support any type of protection scheme with a simple addressing of all objects included.

### BRIEF DESCRIPTION OF THE DRAWINGS.

Figure 1 is a schematic drawing of an arrangement having MSP1+1 Protection of prior art with its object included in an SDIP;
Figure 2 is a schematic drawing of an exemplary arrangement of MSP1:4 configuration of a known system;

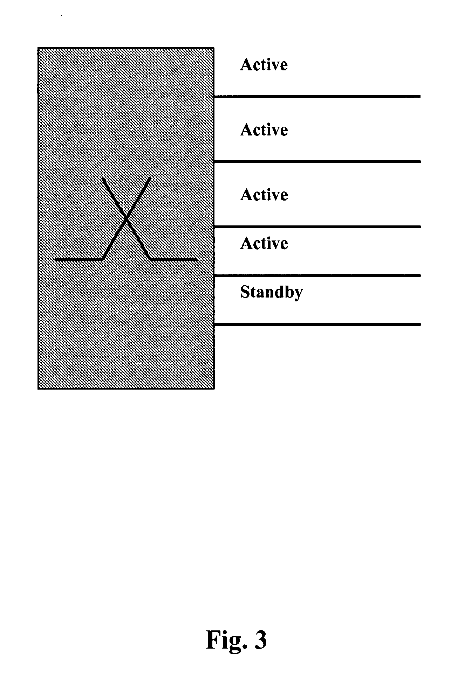

Figure 3 is a schematic drawing of an exemplary SDH interface using MSP 1:4 protection;
Figure 4 is a schematic drawing of an exemplary arrangement with separation of protected and protection layers, MSP1+1/MSP1:1, according to the invention;
Figure 5 is a schematic drawing of an exemplary arrangement with separation of protected and protection layers, MSP1:4, according to the invention; and
Figure 6 is a schematic drawing of an exemplary arrangement with separation of protected and protection layers, SNCP, according to the invention.

### DETAILED DESCRIPTION OF EMBODIMENTS.

### In the following, by way of example, the invention will be explained in more detail

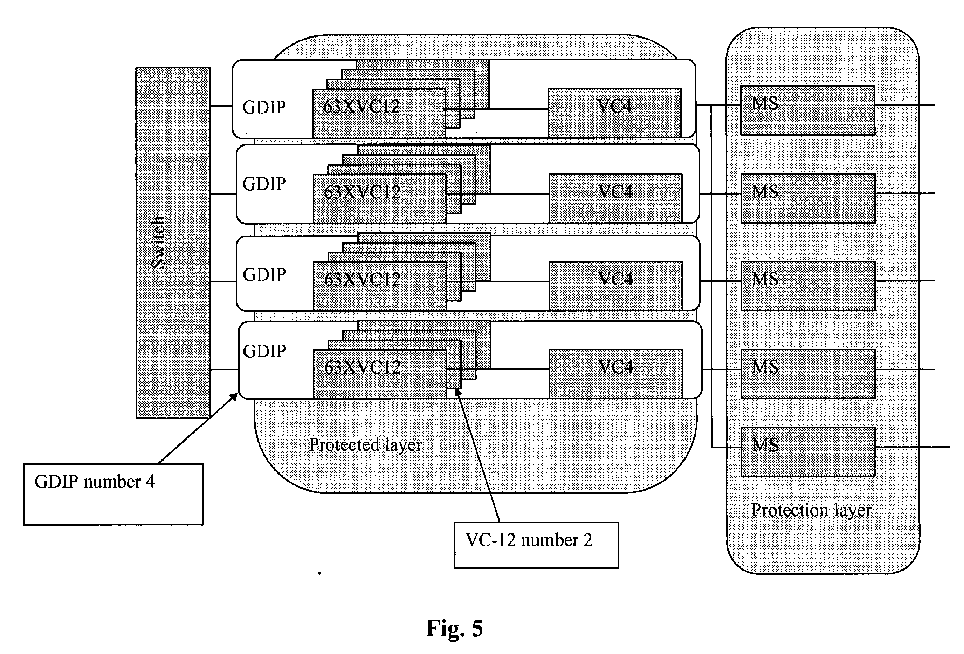

With reference to figures 4 and 5, a new information arrangement or model according to the invention will introduce a new handling object, here referred to as GDIP, which, as illustrated, include one VC-4 object and 63 VC-12 objects (note that the number of objects in each layer may differ depending on standard ITU-T or ANSI, and termination level, STM-1, STM-4, or other). This means that, compared with the previously known solution, the protection layer, MS, is separated from the protected layers, VC-4 and VC-12. This is illustrated by two possible configurations, MSP1+1/MSP1:1, shown in figure 4, and MSP1:4 shown in figure 5, respectively.

Addressing through implementations of the new information arrangement or model according to the invention will be simpler with respect to the VC-4 and the VC-12 objects. These objects will be addressed using the GDIP, as shown in figure 5. GDIP has pointers to the contained VC-4 and VC-12 objects. It also has global state information representing the contained objects.

For the system example employed to illustrate the situation in table 1 above, an implementation of the invention in the sanme system wold give the following results:
a) one table for the GDIP, and
b) one table for the MS.

The situation as presented to a supervisor or manager will then become as shown in the following tables, table II and table III, respectively:

**Table II:**

| **GDIP** | **LAYER** | **STATE** | **BLS** | **FAULT** | **TYPE** | **PL/TTI** | **LST** |
|---|---|---|---|---|---|---|---|
| gdip | | state | bls | | | | |
| | VC4 | state | bls | fault | type | pl/tti | lst |
| | VC12-0 | state | bls | fault | type | | lst |
| | VC12-1 | state | bls | fault | type | | lst |
| | . | . | . | . | . | | . |
| | VC12-63 | state | bls | fault | type | | lst |

**TableIII:**

| **MS** | **STATE** | **BLS** | **FAULT** | **LST** |
|---|---|---|---|---|
| MS | state | bls | fault | |

As can be seen from the examples above, the new information model arrangement gives a presentation that is much easier to read since it contains fewer objects. Also it is easier to understand the addressing because one GDIP object will contain only one VC-4, and all VC-12s in the presentation will belong to the same VC-4. This gives a more logical addressing format. Also, the presentation for the MS object is better because it contains information for only one MS. It will also be possible to assign logical names to the MSs.

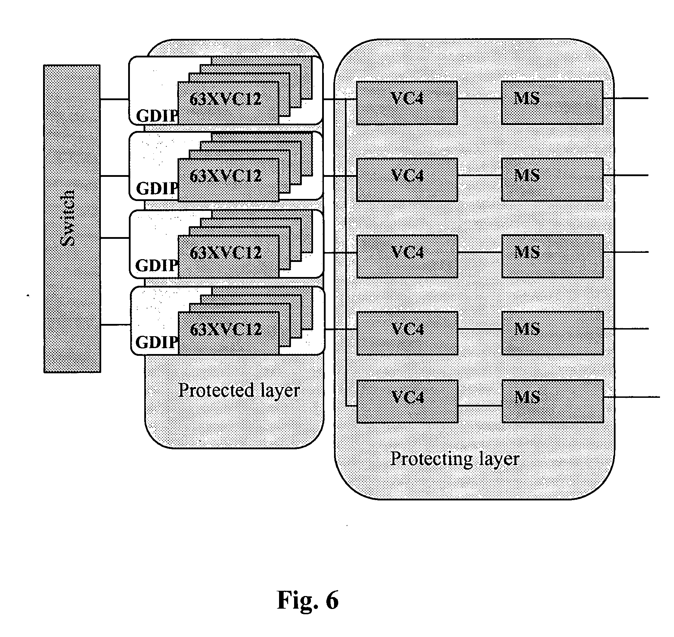

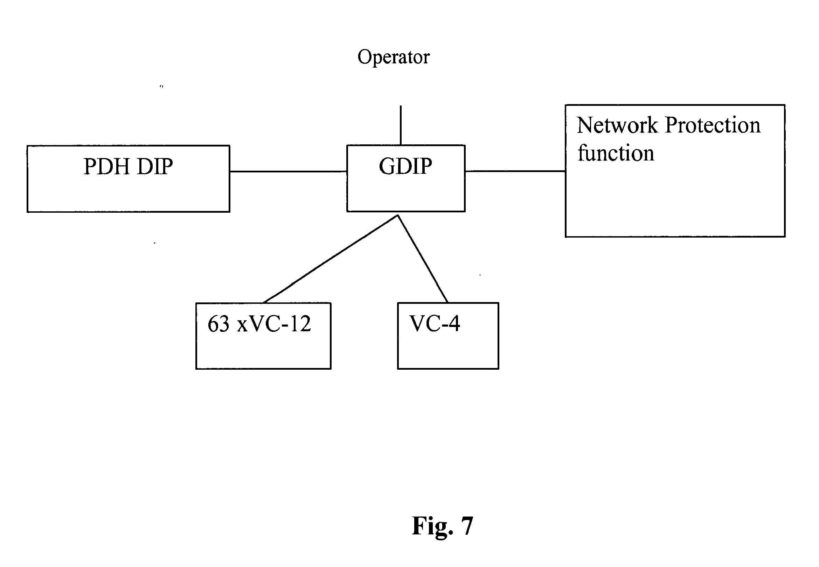

Since the MS objects are not contained in the GDIP object, they have to be addressed in a separate name space. The number of MS objects will correspond to the number of physically connected network terminations. If SNCP (Sub Network Network Protection) is used, the protection layer should be separated the same way as the MS objects in MSP (Multiplex Section Protection). As can be seen from fig. 6, each group of 63 VC-12 belongs to the new object, GDIP.

### ADVANTAGES

The main advantages obtained by the invention are:
• The new information arrangement (or model) supports any kind of multiplex section protection (MSP1+1, MSP 1:N and MSP N:M);
• Flexible solution: The same arrangement model can be used to represent any protocol stack similar the SDH or SONET hierarchy;
• Easier handling of SDH termination from a user or operator point of view;
• Grouping of contained objects (VC-4 and VC-12) in accordance with the new arrangement gives the possibility to have global state information in the grouping object showing the status of the contained objects; and
• Can be used for terminations following the ANSI (American National Standardisation Institute), the Japanese (TTC) and the ITU-T or ETSI (International Telecommunication Union or European Telecommunications Standards Institute) Standards or Recommendations. (Note that the naming of the contained objects differ in the mentioned markets).

The principles of the invention can also be applied for information models where SNCP (Sub Network Connection Protection) is used. That is, all protocols stacks having a protection- and a protected layer.

The invention may be used for any of the standards or recommendations specified by ITU-T, ANSI or TTC. I.e. it is applicable both for SDH and for SONET standards. Within the SDH and SONET hierarchy, there are also defined different levels of terminations. That is, for SDH there are defined STM-1 (155 Mbps), STM-4 (622 Mbps), STM-16(2.5 Gbps),etc., in SONET there are correspondingly OC-3 (155 Mbps), OC-12(622 Mbps), OC-48(2.5Gbps),etc. However, the invention can be applied for all levels of SDH or SONET.

### TERMS, ABBREVIATIONS AND REFERENCES

- ANSI: American National Standardization Institute
- APS: Automatic Protection Switching
- ETSI: European Telecommunication Standards Institute
- GDIP: General Digital Path
- ITU-T: International Telecommunication Union - Telecommunications sector
- MS: Multiplex Section
- MSP: Multiplex Section Protection
- SDH: Synchronous Digital Hierarchy
- SDIP: Synchronous Digital Path
- SONET: Synchronous Optical Networks
- SNCP: Sub-Network Connection Protection
- STM-N: Synchronous Transport Module level N
- TTC: Telecommunications Technology Committee (Japan)
- VC-n: Virtual Container, level - n
- PROTECTED LAYER:: A set of entities that are protected by a set of transport entities within a Protection Layer. E.g. the protected layer consists of 2 Mb/s paths, VC-12 paths and a VC-4 path protected by an MSP 1+1 arrangement.
- PROTECTION LAYER:: A set of transport entities offering protection for a set of entities to be transported. E.g. the protection layer consists of Multiplex Sections in case of MSP 1+1 protection.
- ITU-T G.707: Standard document from International Telecommunication Union, Telecommunication Standardization Sector, "Series G: Transmission systems and media", doc. no. ITU-T G.707 (03/96)
- ITU-T G.783: International Telecommunication Union, Telecommunication Standardization Sector, "Series G: Transmission systems and media, digital systems and networks", doc. no. ITU-T G.783 (04/97)
- ITU-T G.841: International Telecommunication Union, Telecommunication Standardization Sector, "Series G: Transmission systems and media, digital systems and networks", doc. no. ITU-T G.841 (10/98)

### GDIP realization

The following description shows how the new GDIP object can be realized. As an example it is showed how the GDIP can be realised for a MSP4:1 configuration.

The new GDIP object has the task of grouping the protected objects in the network termination. In this example, the protected objects are the VC-4 and VC-12 objects, see Figure 1.

The new GDIP Software (SW) object can be implemented with a number of SW record files illustrated with the tables as follows:

**Table 1 GDIP SW Record file with its content**

| GDIP object number | Pointer to VC-4 file | Pointer to VC-12 file' | Global State |
|---|---|---|---|
| 1 | 1 | 1 | GLSTATE#1 |
| 2 | 2 | 64 | GLSTATE#2 |
| 3 | 3 | 127 | GLSTATE#3 |
| 4 | 4 | 190 | GLSTATE#4 |
| 5 | 5 | 253 | GLSTATE#5 |
| 6 | 6 | 316 | GLSTATE#6 |
| 7 | 7 | 379 | GLSTATE#7 |
| 8 | 8 | 442 | GLSTATE#8 |
| 9 | 9 | 505 | GLSTATE#9 |
| 10 | 10 | 568 | GLSTATE#10 |
| 11 | 11 | 631 | GLSTATE#11 |
| N | N | N | GLSTATE#n |

| | | | |
|---|---|---|---|
| ¹ Pointer to first VC-12 of each GDIP. Formula: (GDIP_object_number - 1) x 63 + 1 | | | |

As seen in Table 1, each GDIP object has a pointer to a VC-4 file and a VC-12 file that are both belonging to the new GDIP software object. In the table there is also a Global state information which is described separately.

**Table 2 VC-4 SW record file with its content. 1 VC-4 for each GDIP.**

| GDIP object number | VC-4 object number. Pointer | VC-4 Blocking State info |
|---|---|---|
| 1 | 1 | VC-4 blstate |
| 2 | 1 | VC-4 blstate |
| 3 | 1 | VC-4 blstate |
| 4 | 1 | VC-4 blstate |
| 5 | 1 | VC-4 blstate |
| ... | ... | VC-4 blstate |

Note here that there is a one-to-one relation between the GDIP object and the VC-4 object in this example. For this reason the SW file (Table 2) could be omitted and the pointer to the VC-4 object could be included in the GDIP file. The table can also include a pointer to another SW record file which has all the relevant information for each VC-4 (with information according to earlier implementation known by Ericsson and according to standards/recommendations).

Typical information for each VC-4 class is: VC-4 administrative state, fault information, blocking state, alarm classes, etc.

The maximum file size of VC-4 SW record (Table 2) is equal to the number of GDIPs, since there is only one VC-4 for each GDIP in this example.

**Table 3 VC-12 SW record file with its content. 63 VC-12 for each GDIP.**

| Record Pointer | GDIP object number | VC-12 object number. Relative addressing.² Pointer | VC-12 Blocking State info |
|---|---|---|---|
| 1 | 1 | 1 | VC-12 blstate |
| 2 | 1 | 2 | VC-12 blstate |
| .. | 1 | ... | VC-12 blstate |
| 63 | 1 | 63 | VC-12 blstate |
| 64 | 2 | 1 | VC-12 blstate |
| 65 | 2 | 2 | VC-12 blstate |
| ... | 2 | ... | VC-12 blstate |
| 126 | 2 | 63 | VC-12 blstate |
| 127 | 3 | 1 | VC-12 blstate |
| 128 | 3 | 2 | VC-12 blstate |
| ... | 3 | ... | VC-12 blstate |
| 189 | 3 | 63 | VC-12 blstate |
| 190 | 4 | 1 | VC-12 blstate |
| 191 | 4 | 2 | VC-12 blstate |
| ... | ... | ... | VC-12 blstate |
| 252 | 4 | 63 | VC-12 blstate |

The table can also include a pointer to another SW record file which has all the relevant information for each VC-12 (with information according to earlier implementation known by Ericsson and according to standards/recommendations). Typical information for each VC-12 class is: VC-12 administrative state, fault information, blocking state, alarm classes, etc. The maximum file size of VC-12 SW record (Table 3) is equal to 63 x (number of GDIPs).

By using the SW record files, the GDIP has defined the relations to the VC-4 and VC-12 objects that belongs to GDIP itself.
² Relative addressing here means that VC-12 are numbered 1 to 63 for each GDIP

As an example VC-12 number 2 (VC-12-2) of GDIP number 4 is then calculated as follows (see illustration Figure 2):
• Table 1 gives that the first VC-12 of GDIP number 4 has pointer equal to 190
• Using Table 3 and incrementing the "Record pointer" by one (since it was VC-12 number 2 of GDIP number 4 we wanted), we find the VC-12-2 of GDIP number 4

Without the invention, the same VC-12 would be addressed as VC-12-191 of the group of protected VC-12s (using existing SDIP concepts of Ericsson). In this case it is also more difficult to see which VC-4 a specific VC-12 belongs to (i.e. without the grouping into GDIP).
Note that the tables given in this description is shown with a minimum of information with the purpose of illustrating the addressing principles of objects (VC-4 and VC-12) within a GDIP. Each object (VC-4 and VC-12) in a real application will contain more data for each entry.

The Global State of the GDIP can be used to present the overall status of the contained objects. The global state of the GDIP can be derived using the following examples of rules:

**Table 4 Derivation of GDIP Global State based on the corresponding VC-4 and VC-12 blocking states.**

| GDIP Global State | VC-4 Blocking State | VC-12 Blocking State |
|---|---|---|
| Working | Working | Working |
| Blocked | Blocked | Blocked |
| Partly Blocked | Working | 1 or more (up to 63) VC-12 are NOT blocked |

The GDIP Object calculates the Global State by checking the blocking state for each of the objects (VC-4 and VC-12) that are related with the GDIP object. Without the proposed invention, the blocking state for each involved object will be presented individually giving very extensive printouts. The grouping proposed gives a short and compact presentation, especially for the "all working" or "all blocked" cases. In additon then, as an option the traditional presentation of each subobjects blocking state can be presented to give the detailed view of each objects.

### Interfaces of the GDIP

The GDIP object will have the following interfaces:
• Operator interface for presentation of GDIP internal relations (i.e. in order to show the objects grouped by each GDIP object), and for presentation of the Global State information, etc.
• Interface to other transport layer, e.g. Digitial Path (2 Mbps signal carrying 32 timeslots of 64 kbps each)
• Interface to "Protecting Layer", i.e. interface to the Multiplex Section (MS) objects or to an object representing the network protection functionality, i.e. existing part of the telecom system that provide the network redundance. This other object or part of the system handle itself the status and actions of the network protection function.
Figure 6 illustrates Interfaces for GDIP object (example)
Figure 5 illustrates New GDIP object for an MSP1:4 configuration

### Clarification of the terms "Global state" and "global addressing"

### Global adressing

With global addressing it is meant that an object is given an address from the global addressing space. In the patent application we have described the global addressing of VC-12 and VC-4 objects as a problem. By introducing the overlying object GDIP we can give the VC-12 and VC-4 objects addresses relative to the GDIP. This gives a much better picture of the objects related to the network and physical interfaces.

### Global state

Global state of an object is the state of operation the object is in. As an example we can use an object with sub objects like the GDIP. We can define the following global states for this object (as an example):
• Working: All underlying objects are working.
• Partly blocked: Some underlying objects are blocked.
• Blocked: All underlying objects are blocked.

## Claims

1. An apparatus for use in an arrangement for operating, supervising, monitoring, controlling or managing protected or protection items of network terminations such as regenerator sections, multiplexer sections and virtual containers in a telecommunication network having a structure according to SDH or SONET and including a plurality of digital paths comprising said network terminations, wherein sets of protected or protection items of network terminations are linked in respective ones of said digital paths, said apparatus being adapted to comprise information objects representing respective ones of the protected or protection items of network terminations, each of said information objects being individually addressable by a respective global address and adapted to provide a status indicator representing an operational status of the respective protected or protection item,
**characterised in that** the apparatus comprises
a plurality of general digital information path (GDIP) objects having each
- an identifier useful for determining one respective set of information objects being contained in the GDIP object and representing a corresponding set of protected items of network terminations linked in a digital path of the telecommunication network,
- an addressing means adapted to address each of the information objects of the one set of information objects contained in the GDIP object by calculating the global address of said each of the information objects by way of an offset from an address pointer being specific to the GDIP object,
- a means for calculating a GDIP object specific global state indicator on basis of said state indicators provided by said each of the information objects addressed by said addressing means, and
- an operator interface being adapted to present the GDIP specific global state indicator as calculated by the means for calculating a global state indicator, and relations of the information objects contained in the GDIP object and as addressed by the addressing means.

2. The apparatus of claim 1, wherein the protected item of the network termination is an SDH multiplexer section (MS), an SDH Virtual Container 4 (VC-4) or an SDH Virtual Container 12 (VC-12).

3. The apparatus of claim 1 or 2, wherein the state indicators provided by said each of the information objects are adapted to indicate a working state, an administrative state, a fault state, a blocking state and an alarm class state.

4. The apparatus of claim 2, wherein the means for calculating a global state indicator is adapted to calculate the global state indicator to indicate the respective digital path as a working digital path when the state indicators provided by said each of the information objects representing VC-4 and VC-12 all provide working state indicators, as a blocked digital path when the state indicators provided by said each of the information objects representing VC-4 and VC-12 all provide blocked state indicators, and as a partly blocked digital path when the state indicators provided by said each of the information objects representing VC-4 provide working state indicators and the state indicators provided by one or more of said each of the information objects representing VC-12 provide a blocked state indicator.

## Patentansprüche

1. Apparat zur Verwendung in einer Anordnung zum Betreiben, Überwachen, Beobachten, Steuern oder Verwalten von geschützten Elementen oder Schutzelementen von Netzwerkterminierungen, so wie Zwischenverstärkerabschnitten, Multiplexerabschnitten und virtuellen Containern, in einem Telekommunikationsnetzwerk mit einer Struktur gemäß SDH oder SONET und einschließlich einer Vielzahl digitaler Pfade, die die Netzwerkterminierungen umfassen, wobei Sätze von geschützten Elementen oder Schutzelementen von Netzwerkterminierungen in jeweiligen der digitalen Pfade verbunden sind, wobei der Apparat ausgebildet ist zum Umfassen von Informationsobjekten, die jeweilige der geschützten Elemente oder Schutzelemente von Netzwerkterminierungen darstellen, wobei jedes der Informationsobjekte individuell durch eine jeweilige globale Adresse adressierbar ist und ausgebildet ist zum Bereitstellen eines Statusindikators, der einen Betriebszustand des jeweiligen geschützten Elementes oder Schutzelementes darstellt,
**dadurch gekennzeichnet, dass** der Apparat umfasst
eine Vielzahl von Objekten eines allgemeinen digitalen Informationspfades (GDIP) mit jeweils
- einem Identifizierer, der nützlich ist zum Bestimmen eines jeweiligen Satzes in dem GDIP-Objekt enthaltener Informationsobjekte, und der einen zugeordneten Satz geschützter Elemente von Netzwerkterminierungen darstellt, die in einem digitalen Pfad des Telekommunikationsnetzwerks verbunden sind,
- einer Adressiereinrichtung, die ausgebildet ist zum Adressieren jedes der Informationsobjekte des einen Satz der in dem GDIP-Objekt enthaltenen Informationsobjekte durch Berechnen der globalen Adresse sämtlicher der Informationsobjekte mittels eines Versatzes von einem für das GDIP-Objekt spezifischen Adressenzeiger,
- einer Einrichtung zum Berechnen eines spezifischen globalen Zustandsindikators eines GDIP-Objektes auf Grundlage der Zustandsindikatoren, die durch sämtliche der durch die Adressiereinrichtung adressierten Informationsobjekte bereitgestellt sind, und
- einer Operatorschnittstelle, die ausgebildet ist Präsentieren des spezifischen globalen Zustandsindikators eines GDIP-Objektes, wie durch die Einrichtung zum Berechnen eines globalen Zustandsindikators berechnet, und von Beziehungen der in dem GDIP-Objekt enthaltenen Informationsobjekte und wie durch die Adressiereinrichtung berechnet.

2. Apparat von Anspruch 1, wobei das geschützte Element der Netzwerkterminierung ein SDH-Multiplexerabschnitt (MS), ein SDH Virtual Container 4 (VC-4) oder ein SDH Virtual Container 12 (VC-12) ist.

3. Apparat von Anspruch 1 oder 2, wobei die durch die jeweiligen Informationsobjekte bereitgestellten Zustandsindikatoren ausgebildet sind zum Angeben eines Arbeitszustands, eines Verwaltungszustands, eines Fehlerzustands, eines Blockierzustands und eines Alarmklassenzustands.

4. Apparat von Anspruch 2, wobei die Einrichtung zum Berechnen eines globalen Zustandsindikators ausgebildet ist zum Berechnen des globalen Zustandsindikators zum Angeben des jeweiligen digitalen Pfades als einen digitalen Arbeitspfad, wenn die Zustandsindikatoren, die durch die jeweiligen Informationsobjekte bereitgestellt sind, die VC-4 und VC-12 darstellen, alle Arbeitszustandsindikatoren bereitstellen, als einen blockierten digitalen Pfad, wenn die Zustandsindikatoren, die durch die jeweiligen Informationsobjekte bereitgestellt sind, die VC-4 und VC-12 darstellen, alle Indikatoren eines blockierten Zustands bereitstellen, und als einen teilweise blockierten digitalen Pfad, wenn die Zustandsindikatoren, die durch die jeweiligen Informationsobjekte bereitgestellt sind, die VC-4 darstellen, Arbeitszustandsindikatoren bereitstellen und die Zustandsindikatoren, die durch ein oder mehrere der Informationsobjekte bereitgestellt sind, die VC-12 darstellen, einen Indikator eines blockierten Zustands bereitstellen.

## Revendications

1. Appareil destiné à être utilisé dans un système servant à faire fonctionner, à superviser, à surveiller, à commander ou à gérer des éléments protégés ou de protection de terminaisons de réseau tels que des sections régénératrices, des sections de multiplexage et des conteneurs virtuels dans un réseau de télécommunication ayant une structure conforme à la technique SDH ou SONET et comportant une pluralité de trajets numériques comprenant lesdites terminaisons de réseau, dans lequel des ensembles d'éléments protégés ou de protection des terminaisons de réseau sont reliés dans certains, respectifs, desdits trajets numériques, ledit appareil étant conçu pour comprendre des objets d'informations représentant certains, respectifs, des éléments protégés ou de protection des terminaisons de réseau, chacun desdits objets d'informations étant adressable individuellement par une adresse globale respective et étant conçu pour fournir un indicateur d'état représentant un état de fonctionnement de l'élément protégé ou de protection respectif,
**caractérisé en ce que** l'appareil comprend :
une pluralité d'objets de trajets d'informations numériques généraux (GDIP pour General Digital Information Paths) ayant chacun :
- un identificateur utile à la détermination d'un jeu respectif d'objets d'informations contenus dans l'objet GDIP et représentant un ensemble correspondant d'éléments protégés de terminaisons de réseau reliées à un trajet numérique du réseau de télécommunication,
- un moyen d'adressage conçu pour l'adressage de chacun des objets d'informations dudit ensemble d'objets d'informations contenus dans l'objet GDIP en calculant l'adresse globale de chacun desdits objets d'informations au moyen d'un décalage par rapport à un pointeur d'adresse qui est spécifique de l'objet GDIP,
- un moyen pour calculer un indicateur d'état global spécifique de l'objet GDIP sur la base desdits indicateurs d'état fournis par chacun desdits objets d'informations adressés par ledit moyen d'adressage, et
- une interface d'opérateur qui est conçue pour présenter l'indicateur d'état global spécifique du GDIP tel qu'il est calculé par le moyen de calcul d'un indicateur d'état global, et des relations entre les objets d'informations contenus dans l'objet GDIP et tels qu'ils sont adressés par le moyen d'adressage.

2. Appareil selon la revendication 1, dans lequel l'élément protégé de la terminaison de réseau est une section de multiplexage SDH (MS) (pour Multiplexer Section), un Conteneur Virtuel SDH 4 (VC-4) ou un Conteneur Virtuel SDH 12 (VC-12).

3. Appareil selon la revendication 1 ou 2, dans lequel les indicateurs d'état fournis par chacun desdits objets d'informations sont conçus pour indiquer un état de fonctionnement, un état d'administration, un état de défaut, un état de blocage et un état de classe d'alarme.

4. Appareil selon la revendication 2, dans lequel le moyen de calcul d'un indicateur d'état global est conçu pour calculer l'indicateur d'état global afin d'indiquer le trajet numérique respectif en tant que trajet numérique fonctionnel lorsque les indicateurs d'état fournis par chacun desdits objets d'informations représentant VC-4 et VC-12 fournissent tous des indicateurs d'état de fonctionnement, en tant que trajet numérique bloqué lorsque les indicateurs d'état fournis par chacun desdits objets d'informations représentant VC-4 et VC-12 fournissent tous des indicateurs d'état bloqué, et en tant que trajet numérique partiellement bloqué lorsque les indicateurs d'état fournis par chacun desdits objets d'informations représentant VC-4 fournissent des indicateurs d'état de fonctionnement et lorsque les indicateurs d'état fournis par un ou plusieurs de chacun desdits objets d'informations représentant VC-12 fournissent un indicateur d'état bloqué.
